# EUROPÄISCHE PATENTANMELDUNG

(11) **EP 4 706 990 A1**
(43) Veröffentlichungstag der Anmeldung: **11.03.2026**
(21) Anmeldenummer: 24198693.4
(22) Anmeldetag: 05.09.2024
(51) Int. Cl.: B60C 11/03

(54) **NUTZFAHRZEUGREIFEN, SEINE VERWENDUNG UND DREIACHSIGER SATTELAUFLIEGER**

(71) Anmelder: Continental Reifen Deutschland GmbH, 30175 Hannover (DE)
(72) Erfinder: Kleffmann, Jens, 30175 Hannover (DE); Schnieders, Lars, 30175 Hannover (DE)
(74) Vertreter: Continental Corporation

(57) **Zusammenfassung**

Nutzfahrzeugreifen mit einem Laufstreifen (1) mit Schulterflanken (4) und mit mehreren in Umfangsrichtung umlaufenden Umfangsrillen (3), welche den Laufstreifen (1) in Umfangsrippen (2) gliedern und von welchen zumindest in der vorgesehenen Profiltiefe (T) ausgeführt ist und die von allen Umfangsrillen (3) die tiefste Umfangsrille ist,
wobei der Laufstreifen (1) ein Laufstreifen-Bruttovolumen V_{B} aufweist, welches sich zwischen der in Umfangsrichtung umlaufenden Laufstreifenperipherie und einer parallel zur Laufstreifenperipherie im Laufstreifen (1) verlaufenden, die tiefste Umfangsrille (3) von radial innen berührenden, in Umfangsrichtung umlaufenden Fläche (F₁), welche seitlich bis zu den Schulterflanken (4) reicht, befindet,
und wobei sämtliche innerhalb des Laufstreifen-Bruttovolumen V_{B} ausgebildeten Profilnegative, wie die Umfangsrillen (3) und sonstige Rillen und Einschnitte, in Summe ein Rillenleervolumen V_{R} aufweisen, welches 1 % bis 9 % des Laufstreifen-Bruttovolumens V_{B} beträgt.

Der Nutzfahrzeugreifen weist im Laufstreifen eine Profiltiefe (T) von 4,00 mm bis 9,00 mm auf.

## Beschreibung

Die Erfindung betrifft einen Nutzfahrzeugreifen mit einem Laufstreifen mit Schulterflanken und mit mehreren in Umfangsrichtung umlaufenden Umfangsrillen, welche den Laufstreifen in Umfangsrippen gliedern und von welchen zumindest eine in der vorgesehenen Profiltiefe ausgeführt ist und die von allen Umfangsrillen die tiefste Umfangsrille ist,
wobei der Laufstreifen ein Laufstreifen-Bruttovolumen aufweist, welches sich zwischen der in Umfangsrichtung umlaufenden Laufstreifenperipherie und einer parallel zur Laufstreifenperipherie im Laufstreifen verlaufenden, die tiefste Umfangsrille von radial innen berührenden, in Umfangsrichtung umlaufenden Fläche, welche seitlich bis zu den Schulterflanken reicht, befindet,
und wobei sämtliche innerhalb des Laufstreifen-Bruttovolumen ausgebildeten Profilnegative, wie die Umfangsrillen und sonstige Rillen und Einschnitte, in Summe ein Rillenleervolumen aufweisen, welches 1 % bis 9 % des Laufstreifen-Bruttovolumens beträgt.

Die Erfindung betrifft ferner eine Verwendung der Nutzfahrzeugreifen und einen dreiachsigen Sattelauflieger, welcher als neues Fahrzeug angeboten wird oder in den Verkauf kommt.

Ein Nutzfahrzeugreifen der eingangs genannten Art ist aus der EP 2 292 448 A1 bekannt. Der Laufstreifen weist Umfangsrillen mit einer Profiltiefe von 10,00 mm bis 25,00 mm auf. Das Rillenleervolumen von nur 1 % bis 9 % des Laufstreifen-Bruttovolumens hat zur Folge, dass die Profilsteifigkeit in radialer Richtung derart erhöht ist, dass die Deformationsamplitude des Laufstreifens in einem Ausmaß reduziert wird, welches eine Überkompensation des zu erwartenden Effektes - Verschlechterung des Rollwiderstands durch mehr vorhandenen Gummi -bewirkt. Der Rollwiderstand des Reifens ist somit verringert, wobei die erzielbare Reduktion das Rollwiderstands signifikant sein kann, je nach dem Anteil des Rillenvolumens. Diese Nutzfahrzeugreifen sind insbesondere für den Einsatz als LKW-, Bus- und Anhängerreifen vorgesehen, vorzugsweise für den Einsatz auf der Trailer- bzw. Nachlaufachse solcher Fahrzeuge und weisen den üblichen Aufbau von Radialluftreifen für diese Einsatzzwecke auf.

Die Reduktion des Rollwiderstands von Nutzfahrzeugreifen ist nach wie vor ein dominierendes Thema. Ermittelt wird der Reifenrollwiderstand üblicherweise mittels Rollwiderstandstrommeltests entsprechend ISO 28580 (Ausgabe 2018/07). Die Testergebnisse werden beispielsweise dafür herangezogen, den reifenbezogenen Treibstoffverbrauch bzw. die reifenbezogenen Emissionen eines Fahrzeugs zu berechnen und/oder zu reduzieren, da der Reifenrollwiderstand einen signifikanten Beitrag zu den Verbrauchs- und/oder Emissionswerten leistet. Verbrauchsberechnungen für Nutzfahrzeuge oder Sattelauflieger werden ferner beispielsweise gemäß dem VECTO Tool (Vehicle Energy Consumption Calculation Tool), welches im Auftrag Europäischen Kommission entwickelt wurde, durchgeführt.

Es ist üblich, dass auf Sattelaufliegern (Semitrailern), die von Trailerherstellern als neue Fahrzeuge auf den Markt gebracht werden bzw. angeboten werden und zum Verkauf gelangen, an allen drei freirollenden Achsen ein identischer Reifenartikel, also der gleiche Typ von Nutzfahrzeugreifen, montiert sind. Bekannt sind Nutzfahrzeugreifen für Sattelauflieger, welche im Laufstreifen ein Rillenleervolumen aufweisen, das 7 % bis 16 % des Laufstreifen-Bruttovolumens beträgt, wobei bei Nutzfahrzeugreifen für Trailer, die auch für Einsätze auf unbefestigten Straßen vorgesehen sind, das Rillenleervolumen auch höher als 16 % sein kann.

Es ist bekannt, dass Sattelauflieger, vor allem ihre auf den freirollenden Achsen montierten Reifen, einen hohen Beitrag zum Energieverbrauch und zu den Emissionen des Fahrzeuges leisten, insbesondere hoch belastete Reifen.

Der Einsatz rollwiderstandsoptimierter Nutzfahrzeugreifen auf Sattelaufliegern ist wegen der Erwartung einer geringeren Abriebsleistung, also einer verringerten Lebensdauer der Nutzfahrzeugreifen, bislang nur in geringem Umfang erfolgt. Der Effekt von rollwiderstandsoptimierten Nutzfahrzeugreifen auf Sattelaufliegern lässt sich vom Kunden kaum quantifizieren, weshalb solche Reifen nicht bevorzugt montiert werden, auch wenn sie gegenüber Referenzreifen einen deutlich verbesserten Rollwiderstand und eine nur leicht verschlechterte Lebenserwartung aufweisen. Die Lebenserwartung von rollwiderstandsoptimierten Nutzfahrzeugreifen auf Sattelaufliegern lässt sich gut aus Erfahrungswerten ermitteln, die Auswirkungen auf den Treibstoffverbrauch oder die Emissionen jedoch nicht oder nur sehr ungenau.

Beobachtungen und daraus abgeleitete Analysen haben gezeigt, dass die Nutzfahrzeugreifen auf den einzelnen freirollenden Achsen sehr unterschiedlich beansprucht werden, was sich bei der Lebenserwartung der Nutzfahrzeugreifen, bei einem Vergleich der Nutzfahrzeugreifen auf den einzelnen Achsen, zeigt. Beobachtungen und Analysen seitens der Anmelderin haben gezeigt, dass, wenn die Lebenserwartung der Nutzfahrzeugreifen auf der vorderen Achse mit 100 % bewertet wird, sich für den Nutzfahrzeugreifen auf der zweiten, mittleren Achse eine Lebenserwartung von ungefähr 180 % und für die Nutzfahrzeugreifen auf der dritten, rückwärtigen Achse eine Lebenserwartung von ungefähr 95 % ergibt. Diese Angaben sind beispielhaft und beziehen sich auf einen 40t - Truck mit einem kastenförmigen Semitrailer. Diese unterschiedlichen Lebenserwartungen sind auf unterschiedliche laterale Kräfte, die auf die Nutzfahrzeugreifen auf den einzelnen Achsen wirken, insbesondere bei Kurvenfahrt, zurückzuführen. Insbesondere sind die lateralen Kräfte, die auf die Nutzfahrzeugreifen auf der mittleren Achse wirken, verglichen mit jenen, die auf die Nutzfahrzeugreifen auf der vorderen und der rückwärtigen Achse wirken, deutlich niedriger.

Unterschiedliche Beladungszustände des Sattelaufliegers haben üblicherweise keine wesentlichen Auswirkungen auf die relative Lebenserwartung der Nutzfahrzeugreifen auf den einzelnen Achsen, da die radiale Last, also die Masse des Sattelaufliegers, relativ gleichmäßig auf die einzelnen Achsen verteilt ist. Infolge der höheren Lebenserwartung der Nutzfahrzeugreifen auf der mittleren Achse neigen diese Reifen zu einem ungleichmäßigen Abrieb oder alterungsbedingten Rissbildungen an der Laufstreifenaußenfläche. Um solchen Phänomenen vorzubeugen oder entgegenzuwirken, ist es übliche Praxis, dass Nutzfahrzeugreifen, die sich auf der mittleren Achse befinden, im Laufe des Einsatzes auf die vordere oder rückwärtige Achse ummontiert werden. Dies ist in der Praxis mit dem Aufwand der Ummontage der Reifen, dem damit verbundenen Stillstand des Sattelaufliegers und der erforderlichen regelmäßigen Kontrollen der Nutzfahrzeugreifen auf der mittleren Achse, um zeitgerecht eine Ummontage der Nutzfahrzeugreifen durchzuführen, verbunden.

Der Erfindung liegt die Aufgabe zugrunde, einen Nutzfahrzeugreifen der eingangs genannten Art hinsichtlich des Rollwiderstands noch weiter zu verbessern bzw. zu optimieren.

Der Erfindung liegt ferner die Aufgabe zugrunde, durch eine Verwendung der Nutzfahrzeugreifen gemäß der Erfindung den reifenbezogenen Treibstoffverbrauch bzw. die reifenbezogenen Emissionen eines Fahrzeugs zu reduzieren.

Eine weitere Aufgabe der Erfindung besteht darin, einen dreiachsigen Sattelauflieger, welcher als neues Fahrzeug angeboten wird und/oder in den Verkauf kommt, derart mit Nutzfahrzeugreifen gemäß der Erfindung zu versehen bzw. auszustatten, dass der reifenbezogene Treibstoffverbrauch bzw. die reifenbezogenen Emissionen des Sattelaufliegers reduziert sind.

Die obige erste, auf den Nutzfahrzeugreifen bezogenen Aufgabe wird erfindungsgemäß dadurch gelöst, dass der Nutzfahrzeugreifen im Laufstreifen eine Profiltiefe von 4,00 mm bis 9,00 mm aufweist.

Nutzfahrzeugreifen gemäß der Erfindung sind somit hinsichtlich ihres Rollwiderstands gegenüber jenem aus dem Stand der Technik nochmals reduziert und können sogar einen Rollwiderstand ≤ 3,5 kg/t gemäß ISO 28580:2018 aufweisen. Beobachtungen haben ergeben, dass der Rollwiderstandsvorteil von Nutzfahrzeugreifen gemäß der Erfindung pro mm geringerer Profiltiefe gegenüber Nutzfahrzeugreifen gemäß dem Stand der Technik 70g/t bis 130g/t beträgt. Der Rollwiderstand von erfindungsgemäßen Nutzfahrzeugreifen ist daher zusätzlich zur Rollwiderstandsoptimierung durch das geringe Rillenleervolumen weiter reduziert.

Nutzfahrzeugreifen gemäß der Erfindung sind ferner bevorzugt gemäß der UN/ECE-Regelung Nr. 54 als FRT (Free Rolling Tyre) typengenehmigt und als solche gekennzeichnet. Die Regelung Nr. 54 der Wirtschaftskommission der Vereinten Nationen für Europa (UN/ECE, veröffentlicht am 11.07.2008 im Amtsblatt der Europäischen Union) stellt sicher, dass genehmigte Reifen bestimmte Vorschriften hinsichtlich ihrer Abmessungen und deren Kennzeichnung erfüllen sowie eine Belastungs-/Geschwindigkeits-Dauerprüfung gemäß dieser Regelung bestanden haben. Nutzfahrzeugreifen gemäß der Erfindung erfüllen vorteilhafterweise diese Qualitätskriterien.

Bevorzugt handelt es sich bei einem Nutzfahrzeugreifen gemäß der Erfindung um einen hochbelastbaren Reifen mit einem Loadindex ≥ 156. Bei einem hochbelastbaren Reifen mit einem derartigen Loadindex ist die Rollwiderstandskraft höher als bei einem weniger belastbaren Reifen mit einem kleineren Loadindex. Der mit Nutzfahrzeugreifen gemäß der Erfindung erzielbare Rollwiderstand macht sich daher besonders bei Reifen mit einem Loadindex ≥ 156 besonders bemerkbar.

Nachdem der Rollwiderstandsvorteil von Nutzfahrzeugreifen gemäß der Erfindung pro mm verringerter Profiltiefe, wie oben erwähnt, 70 g/t bis 130 g/t beträgt, ist es von besonderem Vorteil, wenn die Profiltiefe im Laufstreifen höchstens 8,00 mm, insbesondere höchstens 7,00 mm, besonders bevorzugt höchstens 6,00 mm und insbesondere höchstens 5,00 mm beträgt.

Auch das Rillenleervolumen hat Einfluss auf den Rollwiderstand, wobei gemäß bevorzugten Ausführungsformen das Rillenleervolumen höchstens 8 %, insbesondere höchstens 7 % und besonders bevorzugt höchstens 6 %, insbesondere höchstens 5 %, beträgt.

Es gibt eine Anzahl besonders vorteilhafter Kombinationen der Profiltiefe im Laufstreifen mit dem Rillenleervolumen V_{R} im Laufstreifen.

Bei einer dieser vorteilhaften und bevorzugten Kombinationen beträgt die Profiltiefe höchstens 9,00 mm und das Rillenleervolumen höchstens 7 % oder höchstens 8 %.

Bei einer weiteren bevorzugten Ausführungsform beträgt die Profiltiefe höchstens 9,00 mm und das Rillenleervolumen V_{R} höchstens 5 % oder höchstens 6 %. Bei einer weiteren diesbezüglich bevorzugten Variante beträgt die Profiltiefe höchstens 8,00 mm und das Rillenleervolumen V_{R} höchstens 6 % oder 7 %, gemäß einer noch weiteren Variante beträgt die Profiltiefe höchstens 8,00 m und das Rillenleervolumen V_{R} höchstens 5 %.

Die obige zweite, auf die Verwendung bezogene Aufgabe Erfindung wird durch die Verwendung von Nutzfahrzeugreifen gemäß der Erfindung auf einem drei freirollende Achsen aufweisenden, als neues Fahrzeug angebotenen oder zum Verkauf kommenden Sattelauflieger, wobei die Nutzfahrzeugreifen ausschließlich auf der mittleren Achse der drei freirollenden Achsen montiert werden.
oder auf einer eine freilrollende Nachlaufachse aufweisenden Zugmaschine, etwa einer Sattelzugmaschine, oder einem eine freilrollende Nachlaufachse aufweisenden Bus, jeweils ausschließlich auf der frei rollenden Nachlaufachse, gelöst.

Die obige dritte Aufgabe Erfindung wird durch einen dreiachsigen Sattelauflieger gelöst, welcher als neues Fahrzeug angeboten wird und/oder zum Verkauf kommt, und welcher drei freirollenden Achsen aufweist, eine vordere Achse, eine mittlere Achse und eine rückwärtige Achse, wobei auf jeder dieser drei Achsen Nutzfahrzeugreifen montiert sind,
wobei auf der mittleren Achse Nutzfahrzeugreifen gemäß der Erfindung montiert sind
und wobei auf der vorderen und auf der rückwärtigen Achse Nutzfahrzeugreifen montiert sind, welche eine Profiltiefe im Laufstreifen aufweisen, die um mindestens 1,00 mm größer ist als die Profiltiefe der Laufstreifen der auf der mittleren Achse montierten Nutzfahrzeugreifen

Gemäß der Erfindung werden auf der mittleren freirollenden Achse von dreiachsigen Sattelaufliegern, vor deren Verkauf im Neuzustand, oder auf frei rollenden Nachlaufachsen von Zugmaschinen oder Bussen, ebenfalls vor ihrem Verkauf im Neuzustand, Nutzfahrzeugreifen gemäß der Erfindung montiert. Besonders vorteilhaft ist es, dass Sattelauflieger gemäß der Erfindung im verkaufsfertigen Zustand auf der mittleren freirollenden Achse Nutzfahrzeugreifen gemäß der Erfindung montiert sind. Auf den beiden weiteren freirollenden Achsen können andere FRT, etwa Reifen eines anderen Herstellers oder mit einem anderen Tradenamen, montiert sein, wobei diese Reifen eine größere Profiltiefe im Neuzustand aufweisen als der auf der mittleren Achse montierte Reifen gemäß der Erfindung. Damit ist bei Sattelaufliegern die Möglichkeit gegeben, die Lebensdauer der auf der freirollenden Achse montierten Nutzfahrzeugreifen an jene der Nutzfahrzeugreifen auf den anderen Achsen anzupassen, wodurch die oben erwähnte Ummontage entfällt und die bei einer Ummontage zu erwartenden Phänomene, wie ein ungleichmäßigen Abrieb oder alterungsbedingte Rissbildungen an der Laufstreifenaußenfläche, wie bei üblichen Reifen, wegfallen. Nachdem die erfindungsgemäßen Nutzfahrzeugreifen hinsichtlich Rollwiderstand noch weiter verbessert bzw. optimiert sind ergeben sich auch Rollwiderstandsvorteile für einen Sattelauflieger, eine Zugmaschine oder einen Bus selbst. Je nach der Kombination von erfindungsgemäßen Nutzfahrzeugreifen mit anderen Nutzfahrzeugreifen, insbesondere solchen nach dem Stand der Technik, ergibt sich ein merkbarer Rollwiderstandsvorteil nicht nur bei Sattelaufliegern, sondern auch bei Zugmaschinen oder Bussen, wenn bei letztere auf ihren frei rollenden Nachlaufachsen Nutzfahrzeugreifen gemäß der Erfindung montiert sind.

Bei einer bevorzugten Ausführung des als neues Fahrzeug angebotenen oder zum Verkauf kommenden dreiachsigen Sattelaufliegers sind auf der vorderen und auf der rückwärtigen Achse Nutzfahrzeugreifen montiert, die eine Profiltiefe im Laufstreifen aufweisen, die um mindestens 1,50 mm, bevorzugt um mindestens 2,00 mm und insbesondere bis zu 6,00 mm, größer ist als die Profiltiefe der Nutzfahrzeugreifen auf der mittleren Achse. Auf der vorderen und der rückwärtigen Trailerachse befinden sich beispielweise Nutzfahrzeugreifen des gleichen Reifenherstellers mit einem anderen Handelsnamen oder Reifen eines Reifenherstellers, welcher nicht der Hersteller der Reifen auf der mittleren Achse ist. Um die Vorteile der erfindungsgemäßen Nutzfahrzeugreifen auf der mittleren Trailerachse sicherzustellen, ist es von Bedeutung, die relative Laufleistung pro mm Profiltiefe der einzelnen Reifen auf den drei Trailerachsen aufeinander abzustimmen, sodass der Rollwiderstandsvorteil für den dreiachsigen Sattelauflieger einen merkbaren Wert erreicht.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Umfangsabschnitt eines Laufstreifen eines Fahrzeugreifens für Nutzfahrzeuge mit einer Ausführungsvariante einer Laufstreifenprofilierung,
Fig. 2 eine Seitenansicht eines Sattelaufliegers (Semitrailers) mit drei Achsen, welcher an eine Sattelzugmaschine (einen Truck) gekoppelt ist,
Fig. 3 eine Seitenansicht eines Sattelaufliegers (Semitrailers) mit drei Achsen, welcher an eine Sattelzugmaschine (einen Truck) mit einer Nachlaufachse gekoppelt ist.

Nutzfahrzeugreifen gemäß der Erfindung weisen insbesondere einen Loadindex ≥ 156 auf und sind sogenannte Free Rolling Tires (FRT, frei rollende Reifen). Die Bezeichnung FRT ist eine Kennzeichnung gemäß der UN/ECE-Regelung Nr. 54, die angibt, dass der Nutzfahrzeugreifen speziell für Anhängerachsen und ungelenkte bzw. nicht angetriebene Achsen von Nutzfahrzeugen vorgesehen ist. Nutzfahrzeugreifen gemäß der Erfindung sind neben ihrem Einsatz auf Trailern auch für den Einsatz auf nicht gelenkten und nicht angetriebenen Nachlaufachsen von Sattelaufliegern oder Bussen geeignet. Nachlaufachsen dienen der Gewichtsentlastung und sind der jeweiligen Antriebsachse des Fahrzeuges nachgeordnet.

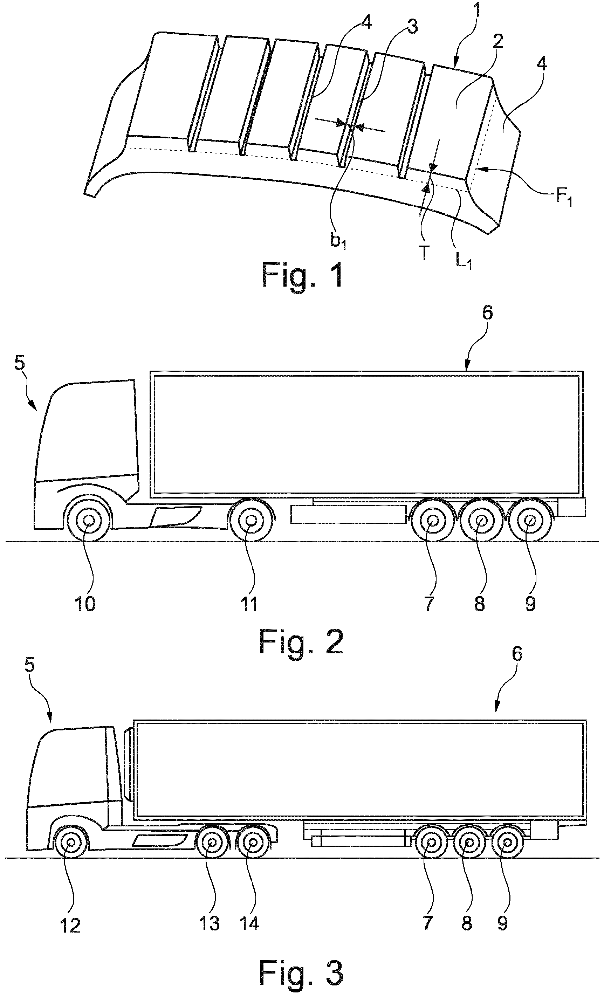

Fig. 1 zeigt beispielhaft und schematisch eine Ausführungsform eines Laufstreifens 1 eines Nutzfahrzeugreifens mit sechs in Umfangsrichtung des Laufstreifens umlaufenden Umfangsrippen 2, welche durch fünf in Umfangsrichtung umlaufende Umfangsrillen 3 voneinander getrennt sind, die bei der gezeigten Ausführung übereinstimmend ausgeführt sind. Die Umfangsrillen 3 weisen an der Laufstreifenperipherie in Umfangsrichtung gerade und parallel zueinander verlaufende Randkanten 4 auf, deren gegenseitiger Abstand der Breite b₁ der Umfangsrille 3 bei neuem Reifen entspricht und beispielsweise 5,00 mm bis 15,00 mm beträgt. Bei weiteren, nicht gezeigten Ausführungen sind im Laufstreifen beispielsweise drei Umfangsrillen 3 in Kombination mit zwei schmäleren Umfangsrillen vorgesehen, die an der Laufstreifenperipherie beispielsweise eine Breite von 1,00 mm bis 5,00 mm aufweisen. Schulterseitig weist der Laufstreifen 1 Schulterflanken 4 auf.

Die Umfangsrillen 3 sowie sonstige Umfangsrillen können in Umfangsrichtung in einer beliebigen Zick-zack- oder Wellenform verlaufen und Rillenflanken aufweisen, die mit einer Struktur, etwa aus Flächenelementen, die Vorsprünge und Vertiefungen bilden, versehen sind. Zumindest eine der Umfangsrippen 2 kann auf nicht gezeigte Weise durch Querrillen, Einschnitte und dergleichen in Blöcke gegliedert oder blockartig strukturiert sein.

Die Umfangsrillen 3 können einen der aus dem Stand der Technik bekannten Querschnitte, insbesondere einen üblichen U-förmigen oder V-förmigen Querschnitt, oder Querschnittsformen mit radialen Abschnitten unterschiedlicher Breiten und/oder geometrischer Formen aufweisen.

Zumindest eine Umfangsrille 3, insbesondere mehrere der im Laufstreifen ausgebildeten Umfangsrillen 3, weisen die für den jeweiligen Reifentyp spezifizierte maximale Tiefe, die Profiltiefe T auf. Die Profiltiefe T ist der in radialer Richtung ermittelter Abstand zwischen den tiefsten Stellen der Umfangsrille(n) 3 und der Laufstreifenperipherie bei neuem Reifen. Bei Nutzfahrzeugreifen gemäß der Erfindung beträgt die Profiltiefe T zumindest 4,00 mm und höchsten 9,00 mm, bevorzugt höchstens 8,00 mm, besonders bevorzugt höchstens 7,00 mm und ganz besonders bevorzugt höchstens 6,00 mm, insbesondere höchstens 5,00 mm. Keine sonstige Profilnegative, wie sonstige Umfangsrillen, keine weitere Rille und keine der ggf. vorgesehenen Einschnitte weisen eine größere Tiefe als die Profiltiefe T auf.

In Fig. 1 ist an der vorderen Schnittfläche des Querschnitts entlang der tiefsten Stellen der auf Profiltiefe T ausgeführten Umfangsrillen 3 eine Linie L₁ eingezeichnet, die parallel zur Laufstreifenperipherie verläuft und in Richtung zu den Außenseiten der Schulterflanken 4 in tangentialer Fortsetzung ihres zur Laufstreifenperipherie parallelen Verlaufs verläuft. Die Linie L₁ verdeutlicht eine im Reifen parallel zur Laufstreifenperipherie umlaufende Fläche F₁. Zwischen der Fläche F₁ und der umlaufenden Fläche an der Laufstreifenperipherie weist der Laufstreifen 1 ein Laufstreifen-Bruttovolumen V_{B} auf. Das Laufstreifen-Bruttovolumen V_{B} setzt sich aus dem Gummivolumen V_{G} des Laufstreifens und dem gesamten Rillenvolumen V_{R} zwischen den erwähnten Flächen zusammen Das Rillenvolumen V_{R} ist daher die Summe sämtlicher Volumina der innerhalb des Bruttovolumens V_{B} vorhandenen Umfangsrillen, Querrillen, Einschnitte und dergleichen. Das Gummivolumen V_{G} und das Rillenvolumen V_{R} beziehen sich auf einen Nutzfahrzeugreifen, der nicht auf einer Felge montiert ist und keinen Reifenfülldruck aufweist.

Bei Nutzfahrzeugreifen gemäß der Erfindung beträgt der Anteil des Rillenvolumens V_{R} am Bruttovolumen V_{B} mindestens 1 % und höchstens 9 %, bevorzugt höchstens 8 %, insbesondere höchstens 7 % und besonders bevorzugt höchstens 6 %, insbesondere höchstens 5%.

Das Rillenvolumen V_{R} kann beispielsweise durch eine dreidimensionale Röntgenuntersuchung, eine Computertomographie, des Laufstreifens 1 ermittelt werden. Innerhalb des Laufstreifen-Bruttovolumens V_{B} werden durch Computertomographie die Dichteunterschiede der Gummimischung des Laufstreifens 1 und der Luft in den Rillen (das Rillenvolumen V_{R}) und damit das Gummivolumen V_{G} und das Rillenvolumen V_{R} ermittelt. Das Verhältnis des Rillenvolumen V_{R} zum Laufstreifen-Bruttovolumen V_{B} ergibt schließlich das prozentuale Rillenvolumen V_{R}. Die Messung erfolgt an Nutzfahrzeugreifen, die nicht auf einer Felge montiert sind und keinen Reifenfülldruck aufweisen.

Fig. 2 zeigt eine schematische Seitenansicht einer Sattelzugmaschine 5 mit einem Sattelauflieger 6 mit drei frei rollenden, bereiften Achsen 7, 8 und 9, einer vorderen Achse 7, einer mittleren Achse 8 und einer rückwärtigen Achse 9. Die Sattelzugmaschine 5 besitzt eine bereifte Lenkachse 10 und eine bereifte Antriebsachse 11. Auf den Achsen 7, 8 und 9 sind Nutzfahrzeugreifen montiert, die beispielsweise einen Load Index ≥ 156 aufweisen.

Auf der mittleren Achse 8 sind Nutzfahrzeugreifen montiert, deren Profiltiefe T, wie oben im Detail erläutert und definiert, mindestens 4,00 mm und höchsten 9,00 mm, und in dessen Laufstreifen der Anteil des Rillenvolumens V_{R} am Bruttovolumen V_{B} mindestens 1 % und höchstens 9 beträgt, ebenfalls wie oben im Detail erläutert und definiert. Auf der vorderen und der rückwärtigen Achse 7, 9 sind insbesondere andere Nutzfahrzeugreifen vom Typ FRT, beispielsweise solche anderer Hersteller oder solche mit einem anderen Tradenamen als die Reifen gemäß der Erfindung montiert. Diese Nutzfahrzeugreifen weisen eine Profiltiefe auf, die um mindestens 1,00 mm, insbesondere um mindestens 1,50 mm, bevorzugt um mindestens 2,00 mm und bis zu 6,00 mm, größer ist als die Profiltiefe T der Nutzfahrzeugreifen auf der mittleren Achse 8.

Die Nutzfahrzeugreifen auf den Achsen 7, 8 und 9 sind somit idealerweise derart aufeinander abgestimmt, dass sie über ihr Reifenleben bzw. die maximale Dauer ihres Einsatzes eine vergleichbare Lebenserwartung und eine vergleichbare Lebenserwartung und ein weitgehend übereinstimmendes "Laufstreifenabriebsbild" aufweisen. Unter "Laufstreifenabriebsbild" sind vor allem Phänomene wie ein möglicher ungleichmäßiger Abrieb und alterungsbedingte Rissbildungen zu verstehen.

Die Nutzfahrzeugreifen auf der mittleren Achse 8 weisen im Vergleich zu den Nutzfahrzeugreifen auf der vorderen und der rückwärtigen Trailerachse 7, 9 einen geringeren Rollwiderstand auf. Pro Prozent reduziertem Rillenleervolumen V_{R} beträgt der Rollwiderstandsvorteil üblicherweise 40 g/t bis 100 g/t, pro Millimeter reduzierter Profiltiefe T üblicherweise rund 70 g/t bis 130g/t.

Fig. 3 zeigt eine Seitenansicht einer Sattelzugmaschine mit einer Lenksachse 12, einer Antriebsachse 13 und dieser nachgeordnete eine frei rollende Nachlaufachse 14. Auf der Sattelzugmaschine befindet sich ein Sattelauflieger mit drei frei rollenden Trailerachsen 7, 8 und 9 mit Nutzfahrzeugreifen wie oben beschrieben. Auf der frei rollende Nachlaufachse 14 sind Nutzfahrzeugreifen gemäß der Erfindung montiert, auf der Antriebsachse 13 übliche Antriebsachsreifen mit einer Profiltiefe von mindestens 8,00 mm und einem Rillenvolumen von mindestens 9 % des Bruttovolumens des Laufstreifens, wie oben definiert.

In den nachstehenden Tabellen 1, 2 und 3 sind jeweils zwei Beispiele der Bereifung der drei Trailerachsen eines Sattelaufliegers angegeben. Das jeweils obere Beispiel (als "NFZ (SDT)" bezeichnet) ist ein Beispiel mit drei gleich ausgeführten Nutzfahrzeugreifen gemäß dem Stand der Technik auf allen drei Trailerachsen des Sattelaufliegers. Das jeweils untere Beispiel (als "NFZ (Erfindung mittlere Trailerachse)" bezeichnet) ist ein Beispiel mit gemäß der Erfindung ausgeführten Nutzfahrzeugreifen auf der mittleren Trailerachse und gemäß dem Stand der Technik und gleich ausgeführten Nutzfahrzeugreifen auf der vorderen und der rückwärtigen Trailerachse des Sattelaufliegers. Die Angaben bzw. Daten der gemäß der Erfindung ausgeführten Nutzfahrzeugreifen sind der besseren Unterscheidbarkeit zu den Angaben bzw. Daten der Nutzfahrzeugreifen gemäß dem Stand der Technik in fetter Schrift hervorgehoben.

### Ergänzende Erläuterungen zu den Tabellen:

Übliches Rillenleervolumen von Nutzfahrzeugreifen gemäß dem Stand der Technik für Achsen eines Sattelaufliegers: 7% bis 16%, im Einzelfall auch mehr.

Übliche Profiltiefe von Nutzfahrzeugreifen gemäß dem Stand der Technik für die Achsen eines Sattelaufliegers: üblicherweise 9,00 mm bis 14,00 mm.

Rollwiderstandsvorteil von Nutzfahrzeugreifen gemäß der Erfindung pro mm geringerer Profiltiefe gegenüber Nutzfahrzeugreifen gemäß dem Stand der Technik: 70g/t bis 130g/t (Erfahrungswerte). Für die Berechnungen in den Tabellen wurde mit 70g/t gerechnet, um bei der Berechnung des Rollwiderstandsvorteils einen erfahrungsgemäß mindestens zu erwartenden Vorteil aufzuzeigen.

Rollwiderstandsvorteil von Nutzfahrzeugreifen gemäß der Erfindung pro % geringeres Rillenleervolumen gegenüber Nutzfahrzeugreifen gemäß dem Stand der Technik: üblicherweise 40 g/t bis 100 g/t (Erfahrungswerte). Für die Berechnungen in den Tabellen wurde mit 40g/t gerechnet, um bei der Berechnung des Rollwiderstandsvorteils einen erfahrungsgemäß mindestens zu erwartenden Vorteil aufzuzeigen.

In Beispiel 1 sind bereits besonders rollwiderstandsoptimierte Nutzfahrzeugreifen gemäß dem Stand der Technik angenommen worden, ersichtlich an der geringen Profiltiefe von 10,00 mm und dem geringen Rillenleervolumen von 7%.

In Beispiel 2 sind durchschnittlich rollwiderstandsoptimierte Nutzfahrzeugreifen gemäß dem Stand der Technik angenommen worden, ersichtlich an der Profiltiefe von 11,50 mm und dem Rillenleervolumen von 12%.

In Beispiel 3 sind nicht rollwiderstandsoptimierte Nutzfahrzeugreifen gemäß dem Stand der Technik angenommen worden, ersichtlich an der Profiltiefe von 14,00 mm und dem Rillenleervolumen von 16%.

Im Beispiel 1 (Tabelle 1) beträgt der Rollwiderstandsvorteil der erfindungsgemäßen Nutzfahrzeugreifen durch die geringere Profiltiefe und das geringere Rillenleervolumen gegenüber den Nutzfahrzeugreifen gemäß dem Stand der Technik pro Achse 325g/t, für den 3-achsigen Sattelauflieger 108g/t, im Beispiel 2 für die erfindungsgemäßen Nutzfahrzeugreifen 560g/t und 187g/t für den 3-achsigen Sattelauflieger, im Beispiel 3 für die erfindungsgemäßen Nutzfahrzeugreifen 790g/t und 263g/t für den 3-achsigen Sattelauflieger.

**Tabelle 1 (Beispiel 1)**

| | | Vordere Achse | Mittlere Achse | Rückwärtige Achse |
|---|---|---|---|---|
| NFZ (SDT) | Profiltiefe [mm] | 10 | 10 | 10 |
| | Höhe Profiltiefenindikator [mm] | 2 | 2 | 2 |
| | Profiltiefe (Profilhöhe, die relevant für die Laufleistung ist) [mm] (=Profiltiefe - Höhe Profiltiefenindikator) | 8 | 8 | 8 |
| | Relative Laufleistung [%] | 100 | 180 | 95 |
| | Relative Laufleistung pro mm Profiltiefe [%/mm] | 12,5 | 22,5 | 11,9 |
| | Rillenleervolumen [%] | 7 | 7 | 7 |
| NFZ (Erfindung, mittlere Trailerachse) | Profiltiefe [mm] | 10 | **6,5** | 10 |
| | Höhe Profiltiefenindikator [mm] | 2 | **2** | 2 |
| | Profiltiefe (Profilhöhe, die relevant für die Laufleistung ist) [mm] (=Profiltiefe - Höhe Profiltiefenindikator) | 8 | **4,5** | 8 |
| | Relative Laufleistung pro mm Profiltiefe [%/mm] | 100 | **101** | 95 |
| | Rollwiderstandsvorteil [g/t] auf Grund der reduzierten Profiltiefe (gerechnet mit 70g/(t x mm)) ⁽¹⁾ | 0 (Referenz) | **245 (=3,5*70)** | 0 (Referenz) |
| | Rillenleervolumen [%] | 7 | **5** | 7 |
| Rollwiderstandsvorteil [g/t] auf Grund des reduzierten Rillenleervolumens (gerechnet mit 40 g/(t x %)) ⁽¹⁾ | 0 (Referenz) | **80 (=2*40)** | 0 (Referenz) | |
| Rollwiderstandsvorteil [g/t] ⁽¹⁾ | 0 (Referenz) | **325 (=245+80)** | 0 (Referenz) | |
| Rollwiderstandsvorteil für 3-achsigen Sattelauflieger [g/t] | | **108 (=325 : 3)** | | |

**Tabelle 2 (Beispiel 2)**

| | | Vordere Achse | Mittlere Achse | Rückwärtige Achse |
|---|---|---|---|---|
| NFZ(SDT) | Profiltiefe [mm] | 11,5 | 11,5 | 11,5 |
| | Höhe Profiltiefenindikator [mm] | 2 | 2 | 2 |
| | Profiltiefe (Profilhöhe, die relevant für die Laufleistung ist) [mm] (=Profiltiefe - Höhe Profiltiefenindikator) | 9,5 | 9,5 | 9,5 |
| | Relative Laufleistung [%] | 100 | 180 | 95 |
| | Relative Laufleistung pro mm Profiltiefe [%/mm] | 10,5 | 18,9 | 10,0 |
| | Rillenleervolumen [%] | 12 | 12 | 12 |
| NFZ (Erfindung, mittlere Trailerachse) | Profiltiefe [mm] | 11,5 | **7,5** | 11,5 |
| | Höhe Profiltiefenindikator [mm] | 2 | **2** | 2 |
| | Profiltiefe (Profilhöhe, die relevant für die Laufleistung ist) [mm] (=Profiltiefe - Höhe Profiltiefenindikator) | 9,5 | **5,5** | 9,5 |
| | Relative Laufleistung pro mm Profiltiefe [%/mm] | 100 | **104** | 95 |
| | Rollwiderstandsvorteil [g/t] auf Grund der reduzierten Profiltiefe (gerechnet mit 70g/(t x mm)) ⁽¹⁾ | 0 (Referenz) | **280 (=4*70)** | 0 (Referenz) |
| | Rillenleervolumen [%] | 12 | 5 | 12 |
| | Rollwiderstandsvorteil [g/t] auf Grund des reduzierten Rillenleervolumens (gerechnet mit 40 g/(t x %)) ⁽¹⁾ | 0 (Referenz) | **280 (=7*40)** | 0 (Referenz) |
| | Rollwiderstandsvorteil [g/t] ⁽¹⁾ | 0 (Referenz) | **560 (=280 +280)** | 0 (Referenz) |
| | Rollwiderstandsvorteil für 3-achsigen Sattelauflieger [g/t] | | **187 (=560** : **3)** | |

**Tabelle 3 (Beispiel 3)**

| | | Vordere Achse | Mittlere Achse | Rückwärtige Achse |
|---|---|---|---|---|
| NFZ (SDT) | Profiltiefe [mm] | 14 | 14 | 14 |
| | Höhe Profiltiefenindikator [mm] | 2 | 2 | 2 |
| | Profiltiefe (Profilhöhe, die relevant für die Laufleistung ist) [mm] (=Profiltiefe - Höhe Profiltiefenindikator) | 12 | 12 | 12 |
| | Relative Laufleistung [%] | 100 | 180 | 95 |
| | Relative Laufleistung pro mm Profiltiefe [%/mm] | 8,3 | 15,0 | 7,9 |
| | Rillenleervolumen [%] | 16 | 16 | 16 |
| NFZ (Erfindung, mittlere Trailerachse) | Profiltiefe [mm] | 14 | 9 | 14 |
| | Höhe Profiltiefenindikator [mm] | 2 | 2 | 2 |
| | Profiltiefe (Profilhöhe, die relevant für die Laufleistung ist) [mm] (=Profiltiefe - Höhe Profiltiefenindikator) | 12 | 7 | 12 |
| | Relative Laufleistung pro mm Profiltiefe [%/mm] | 100 | **105** | 95 |
| | Rollwiderstandsvorteil [g/t] auf Grund der reduzierten Profiltiefe (gerechnet mit 70g/(t x mm)) ⁽¹⁾ | 0 (Referenz) | **350 (=5*70)** | 0 (Referenz) |
| | Rillenleervolumen [%] | 16 | 5 | 16 |
| | Rollwiderstandsvorteil [g/t] auf Grund des reduzierten Rillenleervolumens (gerechnet mit 40 g/(t x %)) ⁽¹⁾ | 0 (Referenz) | **440 (=11*40)** | 0 (Referenz) |
| | Rollwiderstandsvorteil [g/t] ⁽¹⁾ | 0 (Referenz) | **790 (350** + **440)** | 0 (Referenz) |
| | Rollwiderstandsvorteil für 3-achsigen Sattelauflieger [g/t] | | **263 (=790** : **3)** | |

| | | | | |
|---|---|---|---|---|
| (1): pro Reifen, was dem Vorteil pro Achse entspricht | | | | |

### Bezugszeichenliste

- 1: Laufstreifen
- 2: Umfangsrippe
- 3: Umfangsrille
- 4: Schulterflanke
- 5: Sattelzugmaschine
- 6: Sattelauflieger
- 7: vordere Trailerachse
- 8: mittlere Trailerachse
- 9: rückwärtige Trailerachse
- 10, 12: Lenkachse
- 11, 13: Antriebsachse
- 14: Nachlaufachse
- b₁: Breite (der Umfangsrille 3)
- L₁: Linie
- F₁: Fläche

## Patentansprüche

1. Nutzfahrzeugreifen mit einem Laufstreifen (1) mit Schulterflanken (4) und mit mehreren in Umfangsrichtung umlaufenden Umfangsrillen (3), welche den Laufstreifen (1) in Umfangsrippen (2) gliedern und von welchen zumindest in der vorgesehenen Profiltiefe (T) ausgeführt ist und die von allen Umfangsrillen (3) die tiefste Umfangsrille ist,
wobei der Laufstreifen (1) ein Laufstreifen-Bruttovolumen V_{B} aufweist, welches sich zwischen der in Umfangsrichtung umlaufenden Laufstreifenperipherie und einer parallel zur Laufstreifenperipherie im Laufstreifen (1) verlaufenden, die tiefste Umfangsrille (3) von radial innen berührenden, in Umfangsrichtung umlaufenden Fläche (F₁), welche seitlich bis zu den Schulterflanken (4) reicht, befindet,
und wobei sämtliche innerhalb des Laufstreifen-Bruttovolumen V_{B} ausgebildeten Profilnegative, wie die Umfangsrillen (3) und sonstige Rillen und Einschnitte, in Summe ein Rillenleervolumen V_{R} aufweisen, welches 1 % bis 9 % des Laufstreifen-Bruttovolumens V_{B} beträgt,
**dadurch gekennzeichnet,**
**dass** der Nutzfahrzeugreifen im Laufstreifen eine Profiltiefe (T) von 4,00 mm bis 9,00 mm aufweist.

2. Nutzfahrzeugreifen nach Anspruch 1, **dadurch gekennzeichnet, dass** er gemäß der UN/ECE- Regelung Nr. 54 als FRT (Free Rolling Tyre) typengenehmigt ist und als FRT gekennzeichnet ist.

3. Nutzfahrzeugreifen nach Anspruch 1 oder 2, **dadurch gekennzeichnet, dass** er einen Loadindex ≥ 156 aufweist.

4. Nutzfahrzeugreifen nach einem der Ansprüche 1 bis 3, **dadurch gekennzeichnet, dass** die Profiltiefe (T) höchstens 8,00 mm, insbesondere höchstens 7,00 mm und besonders bevorzugt höchstens 6,00 mm, insbesondere höchstens 5,00 mm, beträgt.

5. Nutzfahrzeugreifen nach einem der Ansprüche 1 bis 4, **dadurch gekennzeichnet, dass** das Rillenleervolumen V_{R} höchstens 8%, insbesondere höchstens 7% und besonders bevorzugt höchstens 6%, insbesondere höchstens 5%, beträgt.

6. Nutzfahrzeugreifen nach einem der Ansprüche 1 bis 4, **dadurch gekennzeichnet, dass** die Profiltiefe (T) höchstens 9,00 mm und das Rillenleervolumen V_{R} höchstens 7% oder höchstens 8% beträgt.

7. Nutzfahrzeugreifen nach einem der Ansprüche 1 bis 4, **dadurch gekennzeichnet, dass** die Profiltiefe (T) höchstens 9,00 mm und das Rillenleervolumen V_{R} höchstens 5% oder höchstens 6% beträgt

8. Nutzfahrzeugreifen nach einem der Ansprüche 1 bis 4, **dadurch gekennzeichnet, dass** die Profiltiefe (T) höchstens 8,00 mm und das Rillenleervolumen V_{R} höchstens 6% oder 7% beträgt.

9. Nutzfahrzeugreifen nach einem der Ansprüche 1 bis 4, **dadurch gekennzeichnet, dass** die Profiltiefe (T) höchstens 8,00 mm und das Rillenleervolumen V_{R} höchstens 5% beträgt.

10. Verwendung von Nutzfahrzeugreifen nach einem oder mehreren der Ansprüche 1 bis 9 auf einem drei freirollende Achsen (7, 8, 9) aufweisenden, als neues Fahrzeug angebotenen oder zum Verkauf kommenden Sattelauflieger (6) ausschließlich auf der mittleren Achse (8) der drei freirollenden Achsen (7, 8, 9), oder auf einer eine freilrollende Nachlaufachse (14) aufweisenden Zugmaschine, etwa einer Sattelzugmaschine (5), oder einem eine freilrollende Nachlaufachse aufweisenden Bus, jeweils ausschließlich auf der frei rollenden Nachlaufachse (14).

11. Dreiachsiger Sattelauflieger (6), als neues Fahrzeug angeboten oder zum Verkauf kommend, mit drei freirollenden Achsen, einer vorderen Achse (7), einer mittleren Achse (8) und einer rückwärtigen Achse (9), wobei auf jeder dieser drei Achsen (7, 8, 9) Nutzfahrzeugreifen montiert sind,
wobei auf der mittleren Achse (8) Nutzfahrzeugreifen nach einem oder mehreren der Ansprüche 1 bis 8 montiert sind
und wobei auf der vorderen und auf der rückwärtigen Achse (7, 9) Nutzfahrzeugreifen montiert sind, die eine Profiltiefe (T) im Laufstreifen aufweisen, die um mindestens 1,00 mm größer ist als die Profiltiefe (T) der Laufstreifen (1) der auf der mittleren Achse (8) montierten Nutzfahrzeugreifen.

12. Dreiachsiger Sattelauflieger (6) nach Anspruch 11, **dadurch gekennzeichnet, dass** auf der vorderen und auf der rückwärtigen Achse (7, 9) Nutzfahrzeugreifen montiert sind, die eine Profiltiefe (T) im Laufstreifen aufweisen, die um mindestens 1,50 mm, bevorzugt um mindestens 2,00 mm und bis zu 6,00 mm, größer ist als die Profiltiefe (T) der Nutzfahrzeugreifen auf der mittleren Achse (8).
